# EUROPÄISCHE PATENTANMELDUNG

(11) **EP 1 594 346 A2**
(43) Veröffentlichungstag der Anmeldung: **09.11.2005**
(21) Anmeldenummer: 05103665.5
(22) Anmeldetag: 03.05.2005
(51) Int. Cl.: H05B 33/08

(54) **Verfahren zur Ansteuerung einer Blinkleuchte für Kraftfahrzeuge**

(30) Priorität: 07.05.2004 DE 102004022718
(71) Anmelder: Hella KGaA Hueck & Co., 59552 Lippstadt (DE)
(72) Erfinder: Studniorz, Josef, 59329, Wadersloh (DE); Ziethen, Joachim, 59557, Lippstadt (DE)

(57) **Zusammenfassung**

Es wird ein Verfahren zur Ansteuerung einer Blinkleuchte für Kraftfahrzeuge beschrieben,
- wobei die Lichtquelle der Blinkleuchte von mindestens einer Leuchtdioden gebildet wird,
- wobei die Leuchtdiode innerhalb eines Blinkintervalls jeweils für eine bestimmte Zeitdauer eine Soll-Lichtstärke aufweist.

Dabei umfasst jedes Blinkintervall eine Aufdimmphase, in der die für das menschliche Auge wahrnehmbare Lichtstärke der Leuchtdiode von Null auf die Soll-Lichtstärke geregelt wird, und/oder eine Abdimmphase, in der die für das menschliche Auge wahrnehmbare Lichtstärke der Leuchtdiode von der Soll-Lichtstärke auf Null geregelt wird.

## Beschreibung

Die Erfindung bezieht sich auf ein Verfahren zur Ansteuerung einer Blinkleuchte für Kraftfahrzeuge, die zur Fahrtrichtungsanzeige und/oder zum Warnblinken verwendet wird. Derartige Blinkleuchten wiesen in der Vergangenheit häufig eine Glühlampe als Lichtquelle auf Die typische Blinkfrequenz beträgt ca. 1,5 Hz, wobei die Blinkleuchte während der Dauer eines Blinktaktes für 330 Millisekunden leuchtet und für 330 Millisekunden ausgeschaltet ist (siehe zum Beispiel: Kraftfahrtechnisches Taschenbuch der Fa. Bosch; 23. Auflage; Seite 759). Dabei erreicht eine Glühlampen-Blinkleuchte zu Beginn eines Blinkintervalls/Blinkimpulses aufgrund der Kaltleitereigenschaften der Glühlampe nicht unmittelbar nach dem Einschalten ihre Soll-Lichtstärke. Vielmehr glimmt die Glühlampe nach dem Einschalten für den menschlichen Beobachter wahrnehmbar erst "langsam" auf, wobei das Aufglimmverhalten annäherungsweise durch folgende Funktion beschrieben werden kann: L = L₀ (1- exp(t/τ)). Dabei bezeichnet L die Lichtstärke, L₀ die Soll-Lichtstärke, t die Zeit nach dem Einschalten und τ eine Zeitkonstante. Dasselbe Verhalten ist am Ende eines Blinkimpulses zu beobachten. Auch hier erlischt die Glühlampe nicht unmittelbar nach dem Abschalten, sondern glimmt noch wahrnehmbar nach, wobei das Abglimmverhalten annäherungsweise durch folgende Funktion beschrieben werden kann: L = L₀ * exp(t/τ), wobei t die Zeit nach dem Ausschalten bezeichnet.

Neuerdings werden immer häufiger Leuchtdioden (LED) als Lichtquellen für Blinkleuchten im Kraftfahrzeug eingesetzt, da diese im Vergleich zu Glühlampen eine wesentlich höhere Lebensdauer haben. Im Unterschied zu einer Glühlampe erreicht eine Halbleiter-Leuchtdiode aufgrund der anderen Art der Lichterzeugung jedoch unmittelbar nach dem Einschalten des rechteckförmigen Blinkimpulses ihre Soll-Lichtstärke, während sie unmittelbar nach dem Ausschalten wieder dunkel ist. Das abrupte Aufleuchten und Erlöschen der bisher im Markt befmdlichen LED-Blinkleuchten wird jedoch von den Verkehrsteilnehmern als zu "hart" im Unterschied zum "weichen" Auf- und Abglimmen einer Glühlampen-Blinkleuchte empfunden, was zu gewissen Irritationen der Verkehrsteilnehmer führen kann.

In der DE 102 15 472 A1 sind im Zusammenhang mit einer Blinkleuchtenkontrollschaltung, welche für die Kontrolle von Glühlampen-Blinkleuchten anhand des Glühlampenstroms ausgelegt ist, die Kaltleitereigenschaften einer Glühlampe beschrieben. Dabei wird in der DE 102 15 472 A1 vorgeschlagen, bei Verwendung einer LED anstatt einer Glühlampe die Kalteinschaltstromspitze einer Glühlampe über eine pulsweitenmodulierte Zuschaltung einer parallelen Last für die Kontrollschaltung zu simulieren. Die Helligkeit der LED beim Ein-und Ausschalten wird davon nicht beeinflusst, so daß auch die in der DE 102 15 472 A1 beschriebene LED-Blinkleuchte das vorstehend erwähnte "harte" Ein- und Ausschaltverhalten aufweist.

Aus der EP 1 161 121 A1 ist eine LED-Leuchte bekannt, mit der unterschiedliche Lichtfunktionen, denen unterschiedliche Helligkeiten zugeordnet sind, realisiert werden, indem die LED getaktet betrieben wird. Dabei wird für die Realisierung einer bestimmten Lichtfunktion dauerhaft ein festes Tastverhältnisses (Puls-Pausenverhältnis) voreingestellt. Auch die in der EP 1 161 121 A1 beschriebenen LED-Leuchte weist das"harte" Ein- und Ausschaltverhalten auf, was jedoch im Fall einer Dauerlichtfunktionen (z.B. ein Schlusslicht) nicht störend ist.

Aufgabe der Erfindung ist es, ein Verfahren zur Ansteuerung einer LED -Blinkleuchte für Kraftfahrzeug zu schaffen, das eine Auf- und Abglimmcharakteristik ermöglicht, die dem Verhalten einer Glühlampen-Blinkleuchte entspricht.

Diese Aufgabe wird erfindungsgemäß durch die kennzeichnenden Merkmale des Patentanspruches 1 gelöst. Die sich daran anschließenden Unteransprüche enthalten vorteilhafte Weiterbildungen der Erfindung.

Erfindungsgemäß umfasst jedes Blinkintervall eine Aufdimmphase, in der die für das menschliche Auge wahrnehmbare Lichtstärke (Helligkeit) der Leuchtdiode von Null auf die Soll-Lichtstärke geregelt wird, und eine Abdimmphase, in der die für das menschliche Auge wahrnehmbare Lichtstärke (Helligkeit) der Leuchtdiode von der Soll-Lichtstärke auf Null geregelt wird. Zwischen der Aufdimmphase und der Abdimmphase wird die Leuchtdiode mit der Soll-Lichtstärke betrieben. Durch das Vorsehen einer Aufdimmphase und einer Abdimmphase, in der die Lichtstärke der Leuchtdiode im Unterschied zu einem "harten" Ein-und Ausschaltsignal vergleichsweise langsam hoch bzw. herunter geregelt wird, wird so das Erscheinungsbild einer Glühlampen-Blinkleuchte realisiert.

Die Zeitdauer der erfindungsgemäßen Auf-/Abdimmphase, in der die Lichtstärke der LED geregelt wird, orientiert sich vorzugsweise an der vorstehend genannten Zeitkonstanten τ für das Glimmverhalten einer Glühlampe, wobei die Zeitdauer der Auf-/Abdimmphase jedoch ungefähr 1,5 bis 2,5fach so groß ist wie die Zeitkonstante τ der jeweils nachzubildenden Glühlampencharakteristik, welche näherungsweise beschrieben wird durch die Funktionen: L = L₀ (1- exp(t/τ)) und L = L₀ * exp(t/τ).

Versuche haben gezeigt, dass mit einer Zeitdauer für die Auf-/Abdimmphase zwischen 10 Millisekunden und 100 Millisekunden, vorzugsweise zwischen 30 Millisekunden und 80 Millisekunden, eine gute Nachbildung eines Glühlampenverhaltens ermöglicht.

Anhand der beigefügten Zeichnungen soll die Erfindung nachfolgend näher erläutert werden. Es zeigt:
- Figur 1: ein Blockschaltbild zur Ansteuerung einer Blinkleuchte,
- Figur 2: den typischen Verlauf einer Blinkimpulsfolge sowie der daraus resultierende Lichtstärkeverlauf einer Glühlampen-Blinkleuchte,
- Figur 3: den Verlauf einer PWM-Ansteuerung einer LED-Blinkleuchte zur Nachbildung des Ein- und Ausschaltverhaltens der Lichtstärkencharakteristik einer Glühlampen-Blinkleuchte,
- Figur 4: den Verlauf der Blinkfrequenz in Abhängigkeit der Fahrgeschwindigkeit,
- Figur 5: den Verlauf der Auf-/Abdimmzeit in Abhängigkeit von der Fahrgeschwindigkeit.

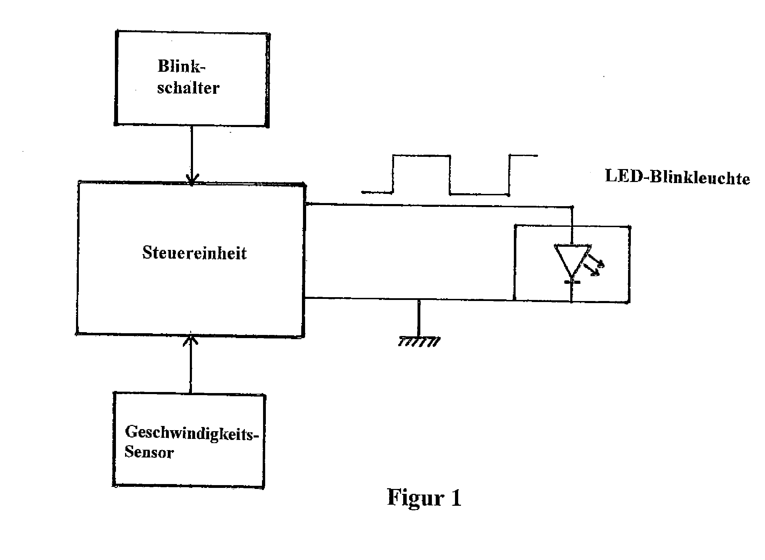

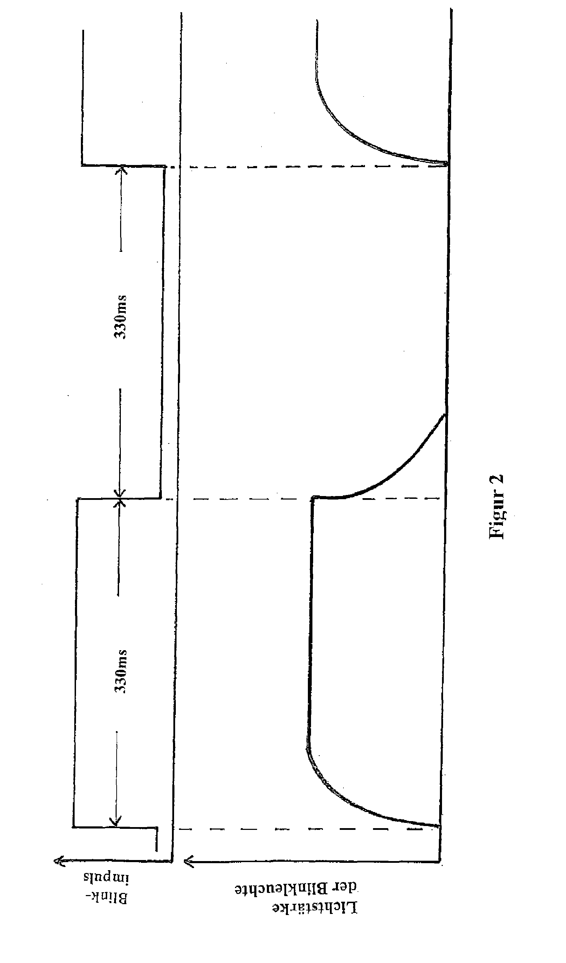

Figur 1 zeigt ein Blockschaltbild zur Ansteuerung einer Blinkleuchte. Durch Betätigung des Blinkschalters oder der Warnblinktaste wird in einer Steuereinheit eine rechteckförmige Impulsfolge generiert durch die Lichtquelle der Blinkleuchte intervallweise mit Strom und Spannung beaufschlagt wird. Im Falle einer Glühlampen-Blinkleuchte resultiert daraus der in der unteren Abbildung der Figur 2 dargestellte Lichtstärkeverlauf mit dem für eine Glühlampe typischen Auf- und Abglimmverhalten, das durch die Gleichungen L = L₀ (1- exp(t/τ)) und L = L₀ * exp(t/τ) zum Ausdruck gebracht wird. Bei herkömmlichen LED-Blinkleuchten werden diese genauso angesteuert, wie eine Glühlampen-Blinkleuchte. Dies hat zur Folge, dass der Lichtstärkeverlauf einer LED-Blinklampe einen rechteckförmigen Verlauf aufweist, der dem der Blinkimpulse in der oberen Abbildung der Figur 2 entspricht.

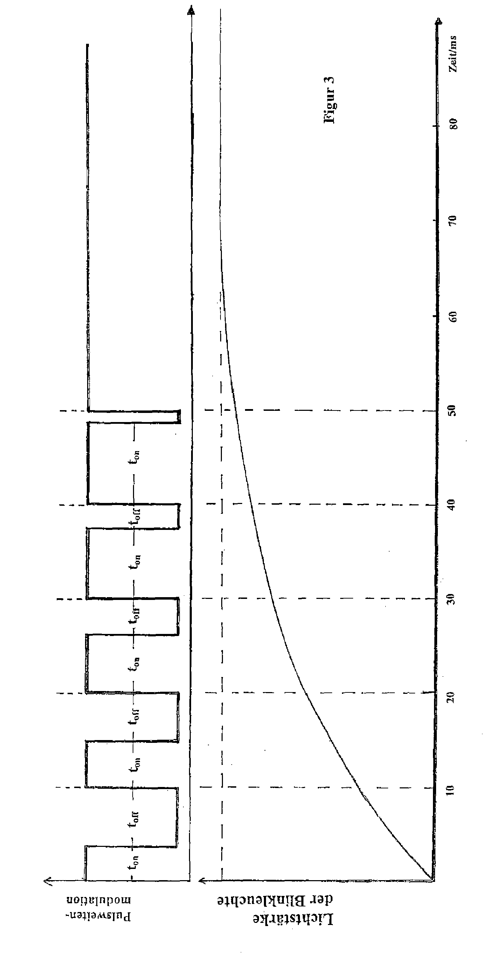

In Figur 3 ist dargestellt wie durch eine PWM (PulsWeitenModulation)-Ansteuerung für die LED eine Aufdimmphase realisiert wird, in der der für den menschlichen Beobachter wahrnehmbare Lichtstärkeverlauf dem Aufglimmverhalten einer Glühlampe entspricht. Dabei liegt der Figur 3 eine Aufdimmphase von 50 Millisekunden zugrunde. Für das nachzubildende Aufglimmverhalten einer Glühlampe wurde folgende Annahme getroffen. L = L₀ (1- exp(t/τ)), wobei für die Zeitkonstante τ in diesem Fall ein Wert von 25 Millisekunden angenommen wurde. Innerhalb der Aufdimmphase wird die LED über einen in der Steuereinheit angeordneten Pulsweitenmodulator pulsweise mit einem periodischen Steuersignal zur Strom- und Spannungsversorgung beaufschlagt. Die Frequenz dieses PWM-Steuersignals beträgt im dargestellten Fall 100Hz (entspricht einer Periodendauer des Steuersignals von 10 Millisekunden). Innerhalb der Aufdimmphase liegen demnach 5 Steuersignalperioden, wobei das Tastverhältnis, d.h. das Verhältnis der Länge des eingeschalteten Zustandes (tₒₙ) zur Periodendauer - auch duty cycle genannt ― entsprechend der nachzubildenden Dimmcharakteristik der Lichtstärke verändert wird.

Ein Beispiel für die Variation des Tastverhältnisses (duty cycle) in der Aufdimmphase wird in der folgenden Tabelle gegeben, die ungefähr den Verlauf gemäß Figur 3 wiederspiegelt:

| **Frequenz des PWM-Steuersignals: 100Hz** **(=> Periodendauer des PWM-Steuersignals: 10Millisekunden)** | | |
|---|---|---|
| **Zeitverlauf (ms) der Aufdimmphase** | **Duty cycle [%]** | **t**_{**on**}**(ms)** |
| **0 ≤ t ≤ 10** | **30** | **3** |
| **10 < t ≤ 20** | **55** | **5,5** |
| **20 < t ≤ 30** | **70** | **7** |
| **30 < t ≤ 40** | **80** | **8** |
| **40 < t ≤ 50** | **86** | **8,6** |

Dabei ist das menschliche Auge zu träge, um die Auszeiten (t_{off}) bei einer Steuersignalfrequenz ab 50 Hz innerhalb einer Steuersignalperiode aufzulösen. Das menschliche Auge nimmt vielmehr integrierend ein flackerfreies Aufdimmen der LED mit steigendem Tastverhältnis (duty cycle) wahr.

Dementsprechend wird auch das Tastverhältnis (duty cycle) während der Abdimmphase variiert (siehe beispielhaft nachfolgende Tabelle). Dabei nimmt das menschliche Auge integrierend ein flackerfteies Abdimmen der LED mit abnehmendem Tastverhältnis (duty cycle) wahr.

| **Zeitverlauf (ms) der Abdimmphase** | **Duty cycle [%]** | **t**_{**on**} **(ms)** |
|---|---|---|
| **0 ≤ t ≤ 10** | **67** | **6,7** |
| **10 < t ≤ 20** | **45** | **4,5** |
| **20 < t ≤ 30** | **30** | **3** |
| **30 < t ≤ 40** | **20** | **2** |
| **40 < t ≤ 50** | **14** | **1,4** |

Für das vorstehend genannte Beispiel ist der Verfahrensablauf während eines Blinktaktes mit einer Periodendauer von 660Millisekunden (Blinkfrequenz = 1,5Hz) also folgender:
1. Aufdimmphase von 50 Millisekunden, in der die LED pulsweise mit einem pulsweitenmodulierten Steuersignal von 100 Hz beaufschlagt wird
2. Soll-Lichtstärkephase von 280 Millisekunden, in der die LED mit einem konstanten, nicht gepulsten Steuersignal beaufschlagt wird.
3. Abdimmphase von 50 Millisekunden, in der die LED pulsweise mit einem pulsweitenmodulierten Steuersignal von 100 Hz beaufschlagt wird
4. Ausschaltphase von 280 Millisekunden.

Bei Verwendung eines Steuersignals mit einer höheren Frequenz, d.h. einer kleineren Steuersignalperiodendauer, ist es möglich, die Dimmcharakteristik einer Glühlampe noch genauer nachzubilden, da dann die Zahl der Steuersignalperioden in der Dimmphase - und damit die PWM-Variationsmöglichkeiten - größer sind. Als Beispiel hierfür soll die nachfolgende Tabelle dienen, der eine Steuersignalfrequenz von 200Hz sowie eine Dimmphase von 60 Millisekunden zugrunde liegt.

| **Frequenz des PWM-Steuersignals: 200Hz** **(=> Periodendauer des PWM-Steuersignals: 5 Millisekunden= 5000 Mikrosekunden)** | | |
|---|---|---|
| **Zeitverlauf (ms) der Aufdimmphase** | **Duty cycle [%]** | **t**_{**on**} **(µs)** |
| **0 ≤ t ≤ 5** | **18** | **900** |
| **5 < t ≤ 10** | **30** | **1500** |
| **10 < t ≤ 15** | **45** | **2250** |
| **15 < t ≤ 20** | **55** | **2750** |
| **20 < t ≤ 25** | **63** | **3150** |
| **25 < t ≤ 30** | **70** | **3500** |
| **30 < t ≤ 35** | **75** | **3750** |
| **35 < t ≤ 40** | **80** | **4000** |
| **45 < t ≤ 50** | **83** | **4150** |
| **50 < t ≤ 55** | **86** | **4300** |
| **55 < t ≤ 60** | **90** | **4500** |
| | | |

| **Zeitverlauf (ms) der Abdimmphase** | **Duty cycle [%]** | **t**_{**on**} **(µs)** |
|---|---|---|
| **0 ≤ t ≤ 5** | **82** | **4100** |
| **5 < t ≤ 10** | **67** | **3350** |
| **10 < t ≤ 15** | **55** | **2750** |
| **15 < t ≤ 20** | **45** | **2250** |
| **20 < t ≤ 25** | **37** | **1850** |
| **25 < t ≤ 30** | **30** | **1500** |
| **30 < t ≤ 35** | **25** | **1250** |
| **35 < t ≤ 40** | **20** | **1000** |
| **45 < t ≤ 50** | **17** | **850** |
| **50 < t ≤ 55** | **14** | **700** |
| **55 < t ≤ 60** | **11** | **550** |

Um eine ausreichend gute Nachbildung der Dimmcharakteristik zu gewährleisten, sollte die Steuersignalfrequenz mindestens 50fach so groß sein wie die Blinkfrequenz der Blinkintervalle, die zwischen 1Hz und 2Hz liegt.

Die Verwendung eines pulsweitenmodulierten Steuersignals zur Nachbildung der Dimmcharakteristik (digitales Dimmen) ist besonders vorteilhaft, da dabei auf in Kraftfahrzeug-Steuereinheiten ohnehin vorhandene taktbare Steuerausgänge zurückgegriffen werden kann, wobei die Pulsweitenmodulation in einfacher Weise über entsprechende Ansteuersoftware und einen Mikroprozessor realisiert werden kann. Dabei kann die Ansteuerung in einfacher Weise flexibel an verschiedene Dimmcharakteristiken über eine einfache Softwareanpassung erfolgen, die eine Änderung der Zeitdauer der Dimmphase und/oder eine Änderung der duty cycle Modulation bewirkt.

Es liegt jedoch auch im Rahmen der Erfindung, die Dimmcharakteristik über eine regelbare Stromquelle oder über ein Potentiometer zu bewirken und so die LED innerhalb der Dimmphase mit einem sich ändernden Strom zu beaufschlagen (analoges Dimmen).

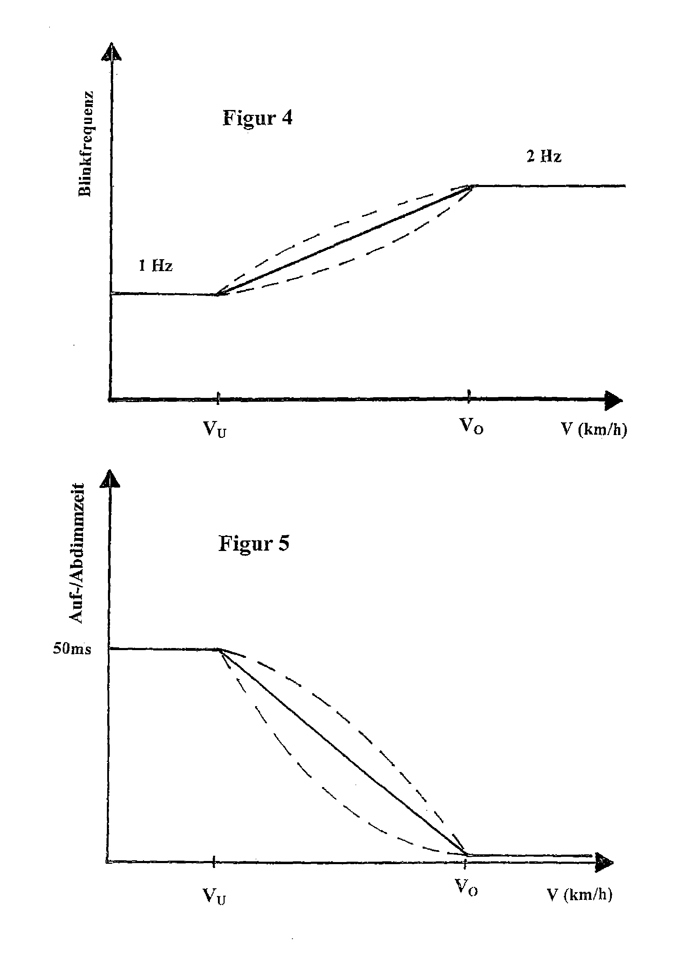

Das "harte" Ein- und Ausschalten von LED-Blinkleuchten, wird allgemein bei kleinen Fahrgeschwindigkeiten, z.B. unterhalb von 50km/h im Stadtverkehr, als irritierend und störend empfunden. Bei höheren Geschwindigkeiten, z.B. auf der Autobahn, kann das "harte " Ein- und Ausschalten jedoch in vorteilhafter Weise zu einer erhöhten Aufmerksamkeit für das Blinksignal führen. Aus diesem Grunde ist es in einer Ausführungsform (siehe Figur 5) vorgesehen, die Zeitdauer der Auf-/Abdimmphase in Abhängigkeit von der Fahrzeuggeschwindigkeit einzustellen, wobei die Zeitdauer der Auf-/Abdimmphase unterhalb einer bestimmten Fahrgeschwindigkeit größer ist als die Zeitdauer oberhalb dieser bestimmten Fahrgeschwindigkeit. Dabei ist es vorzugsweise vorgesehen, dass die Zeitdauer der Auf-/Abdimmphase zwischen einem unteren Fahrgeschwindigkeitsgrenzwert (V_{U}), z.B. 50km/h, und einem oberen Fahrgeschwindigkeitsgrenzwert (V_{O}), z.B. 100km/h, linear abnimmt. Oberhalb von 100km/h sind die Ein-und Ausschaltflanken der Blinkimpulse dann für das menschliche Auge beliebig steil. Anstatt einer linearen Kennlinie im Übergangsbereich sind gestrichelt auch noch zwei alternative Kennlinien eingezeichnet.

Darüber hinaus ist es in einer weiteren Ausführungsform vorgesehen, nicht nur die Zeitdauer der Auf-/Abdimmphase in Abhängigkeit von der Fahrgeschwindigkeit einzustellen, sondern auch die Blinkfrequenz der Blinkintervalle selbst in Abhängigkeit von der Fahrzeuggeschwindigkeit einzustellen (siehe Figur 4), wobei die Blinkfrequenz oberhalb einer bestimmten Fahrgeschwindigkeit größer ist als die Blinkfrequenz unterhalb dieser bestimmten Fahrgeschwindigkeit. Somit wird bei höheren Fahrgeschwindigkeiten ebenfalls durch die erhöhte Blinkfrequenz eine erhöhte Aufmerksamkeit für das Blinksignal bewirkt. Dabei ist es vorzugsweise vorgesehen, dass die Blinkfrequenz zwischen einem unteren Fahrgeschwindigkeitsgrenzwert und einem oberen Fahrgeschwindigkeitsgrenzwert linear zunimmt. Anstatt einer linearen Kennlinie im Übergangsbereich sind gestrichelt auch noch zwei alternative Kennlinien eingezeichnet. Die Abhängigkeit der Blinkfrequenz von der Fahrgeschwindigkeit ist für sich allein genommen für eine Warnblinkeinrichtung ― nicht jedoch für eine Fahrtrichtungsblinkeinrichtung ― bereits aus der DE 695 14 374 T2 bekannt.

Erfmdungsgemäß sind insbesondere die Abhängigkeit der Blinkfrequenz von der Fahrgeschwindigkeit und die Abhängigkeit der Zeitdauer für die Auf-/Abdimmphase von der Fahrgeschwindigkeit aufeinander abgestimmt sind.

## Patentansprüche

1. Verfahren zur Ansteuerung einer Blinkleuchte für Kraftfahrzeuge,
- wobei die Lichtquelle der Blinkleuchte von mindestens einer Leuchtdioden gebildet wird,
- wobei die Leuchtdiode innerhalb eines Blinkintervalls jeweils für eine bestimmte Zeitdauer eine Soll-Lichtstärke aufweist,
**dadurch gekennzeichnet, dass**
- jedes Blinkintervall eine Aufdimmphase umfasst, in der die für das menschliche Auge wahrnehmbare Lichtstärke der Leuchtdiode von Null auf die Soll-Lichtstärke geregelt wird,
und/oder
- jedes Blinkintervall eine Abdimmphase umfasst, in der die für das menschliche Auge wahrnehmbare Lichtstärke der Leuchtdiode von der Soll-Lichtstärke auf Null geregelt wird.

2. Verfahren nach Anspruch 1,
**dadurch gekennzeichnet, dass**
die Zeitdauer der Aufdimmphase und/oder der Abdimmphase zwischen 10 Millisekunden und 100 Millisekunden beträgt.

3. Verfahren nach Anspruch 1,
**dadurch gekennzeichnet, dass**
die Zeitdauer der Aufdimmphase und/oder der Abdimmphase zwischen 30 Millisekunden und 80 Millisekunden beträgt.

4. Verfahren nach einem der vorstehenden Ansprüche,
**dadurch gekennzeichnet, dass**
die Zeitdauer der Aufdimmphase und/oder der Abdimmphase in Abhängigkeit von der Fahrzeuggeschwindigkeit eingestellt wird, wobei die Zeitdauer unterhalb einer bestimmten Fahrgeschwindigkeit größer ist als die Zeitdauer oberhalb dieser bestimmten Fahrgeschwindigkeit.

5. Verfahren nach Anspruch 4,
**dadurch gekennzeichnet, dass**
die Zeitdauer der Aufdimmphase und/oder der Abdimmphase zwischen einem unteren Fahrgeschwindigkeitsgrenzwert und einem oberen Fahrgeschwindigkeitsgrenzwert linear abnimmt.

6. Verfahren nach einem der vorstehenden Ansprüche,
**dadurch gekennzeichnet, dass**
in der Aufdimmphase und/oder Abdimmphase zum Dimmen der Leuchtdiode diese über einen Pulsweitenmodulator pulsweise mit einem periodischen Steuersignal zur Strom- und Spannungsversorgung beaufschlagt wird, wobei das Tastverhältnis (duty cycle) des Steuersignals entsprechend der Dimmcharakteristik der Lichtstärke verändert wird.

7. Verfahren nach Anspruch 6,
**dadurch gekennzeichnet, dass**
die Frequenz des Steuersignals mindestens 50fach so groß ist wie die Blinkfrequenz der Blinkintervalle.

8. Verfahren nach einem der vorstehenden Ansprüche 1 bis 5,
**dadurch gekennzeichnet, dass**
in der Aufdimmphase und/oder Abdimmphase zum Dimmen der Leuchtdiode diese über eine regelbare Stromquelle mit einem entsprechend der Dimmcharakteristik der Lichtstärke veränderbaren Strom beaufschlagt wird.

9. Verfahren nach einem der vorstehenden Ansprüche,
**dadurch gekennzeichnet, dass**
die Blinkfrequenz der Blinkintervalle in Abhängigkeit von der Fahrzeuggeschwindigkeit eingestellt wird, wobei die Blinkfrequenz oberhalb einer bestimmten Fahrgeschwindigkeit größer ist als die Blinkfrequenz unterhalb dieser bestimmten Fahrgeschwindigkeit.

10. Verfahren nach Anspruch 9,
**dadurch gekennzeichnet, dass**
die Blinkfrequenz zwischen einem unteren Fahrgeschwindigkeitsgrenzwert und einem oberen Fahrgeschwindigkeitsgrenzwert linear zunimmt.

11. Verfahren nach
nach einem der Ansprüche 4, 5, 9 oder 10,
**dadurch gekennzeichnet, dass**
die Abhängigkeit der Blinkfrequenz von der Fahrgeschwindigkeit und die Abhängigkeit der Zeitdauer für die Aufimmphase und/oder die Abdimmphase von der Fahrgeschwindigkeit aufeinander abgestimmt sind.
